# EUROPEAN PATENT SPECIFICATION

(11) **EP 1 098 477 B1**
(45) Date of publication and mention of the grant of the patent: **23.12.2009**
(21) Application number: 99122158.1
(22) Date of filing: 05.11.1999
(51) Int. Cl.: H04W 52/28, H04W 52/22, H04W 52/36

(54) **Apparatus and methods for adapting mobile unit to wireless lan**
Verfahren und Vorrichtung zur Anpassung einer mobilen Einheit zu einem drahtlosen lokalen Netzwerk
Appareil et procédé pour adapter une unité mobile à un réseau local sans fil

(43) Date of publication of application: 09.05.2001
(60) Divisional application: 09011613.8
(73) Proprietor: Symbol Technologies, Inc., Holtsville, New York 11742-1300 (US)
(72) Inventor: Hughes, John, San Jose, CA 95126 (US); Singh, Gurpreet, San Jose, CA 95121 (US)
(74) Representative: Wagner, Karl H.

(56) References cited:
- EP-A- 0 779 752
- EP-A- 0 893 930
- EP-A- 0 939 566
- GB-A- 2 308 946
- US-A- 5 579 373
- US-A- 5 613 204
- US-A- 5 900 838
- US-A- 5 930 710

## Description

### BACKGROUND OF THE INVENTION

### 1. Field of the Invention

The invention relates to data communication systems, and more particularly to a wireless local area network (LAN) communication system in which mobile units associate with stationary access points having communications characteristics defined by the particular country in which the LAN is installed.

### 2. The Background Art

A wireless LAN may be implemented by remote mobile units (mobile units) that send messages to and receive messages from base stations or Stationary Access Points (Stationary Access Points) using wireless infrared or radio communication links. Each Stationary Access Point covers a limited area, so a typical network may have several Stationary Access Points.

One protocol that may be used is the IEEE 802.11 Standard which is a standard that defines physical and data link layers for wireless local networks. The standard defines, among other things, the wireless LAN medium access control (MAC) and physical (PHY) layer specifications.

For a message to be transmitted, a mobile unit first becomes associated with an Stationary Access Point. Association refers to the process of synchronizing a mobile unit with an Stationary Access Point for communication, and is initiated by the mobile unit. The mobile unit first listens to the broadcasts over the airwaves and determines which Stationary Access Points are within range of the mobile unit, and then requests association with a particular Stationary Access Point according to certain criteria. At any point in time, a mobile unit is typically associated with only one Stationary Access Point. A single Stationary Access Point can be associated with multiple mobile units.

GB 2308946 A discloses a mobile unit for use in a cellular radio network which includes apparatus for registering the mobile unit with a radio channel. The mobile unit includes means for storing data relating to the frequencies of radio channels operated by base sites in the network and to the geographical areas in which the mobile units are capable of using each radio channel. A location system is used to determine the current position of the mobile unit in the network. A comparing means compares the current position of the mobile unit with the stored geographical data and a selecting means selects a radio channel frequency for registration in dependence on the comparison.

US 5613204 A discloses a cellular telephone system which is upgraded by modifying subscriber units for selective service provider acquisition-during roaming. Priority of acquisition is given to those service providers associated with the home service provider. These preferred service providers are identified by System identification (SIDs) numbers. A roaming subscriber unit will tune to a single broadcast frequency to identify available system providers operating in a physical area to which the subscriber has roamed.

US 5701328 A discloses a chirped spread spectrum positioning system for locating a mobile body comprising a plurality of earth based spread spectrum (SS) broadcasting stations arranged geographically in a cellular pattern. Each SS broadcasting station include a modulator providing a channel signal structure which is substantially orthogonal with respect to adjacent stations in the cellular pattern, each channel signal including navigation beacon data including a unique beacon identification, station latitude and longitude, time slot and phase stations. In one embodiment, each modulator provides a chirped SS signal in which the navigation beacon is a frequency tone that is repeatedly swept over a selected frequency band for each station. A receiver on the mobile body receives the SS signals from at least three of the SS broadcasting stations and determines the location thereof. A fourth SS broadcasting station provides altitude. GPS satellite signals can be used for timing control.

Attention is also drawn to US 5901358 A and WO 97/17623 A.

US 5924034 A discloses a cellular mobile radio system which selects the best cell to be accessed for a given position of a mobile station by determining the distance of the mobile station relative to the base transceiver station of a cell with which it is communicating by measuring the propagation time between the mobile station and the base transceiver station, resolving the indeterminacy associated with the direction in which said mobile station is located relative to said base transceiver station, and then determining which cell the mobile station is situated in the coverage area of, this cell constituting the best cell. The resolving of the indeterminacy is rendered independent of the synchronized or non-synchronized state of the system.

US 5787354 A discloses a cellular telecommunication system (CTS) that supports the operation of a radiotelephone (RT) in cellular and cordless modes. The CTS includes operating features that are dependent upon the intrasystem location of the RT. The CTS includes a mobile telephone switching office, a plurality of land stations, a plurality of cells, a plurality of zones defined by one or more cells, a plurality of local regions defined by one or more cells, and a cordless base station located within one of the cells. The land stations transmit zone identification (ZNID) signals and local region identification (LRID) signals, which the RT receives and compares to one or more ZNID codes and one or more LRID codes, respectively. The RT displays its intrasystem billing zone location and initiates communication with the cordless base station in response to the received ZNID and LRID signals, respectively.

With the ever-growing global market, it is common for users to travel from country to country. A problem therefore occurs, in that one country may allocate a different portion of the frequency spectrum to wireless communications than another country. Additionally, different countries may have different regulations regarding power output of wireless communications. These allocations and regulations may prevent a mobile unit which is designed for use in one country from working (or being allowed to work) in another country.

What is needed, then, is a system and method for allowing a mobile unit to meet regulatory requirements and adapt to and communicate with Stationary Access Points having different communication characteristics.

### BRIEF DESCRIPTION OF THE INVENTION

The present invention relates to an apparatus and method for automatically adapting a mobile unit to communication requirements of a particular country or geographic region. To achieve this capability, the invention comprises a method as set forth in claim 1. Also provided is a mobile unit as set forth in claim 10. Preferred embodiments of the present invention may be gathered from the dependent claims.

### BRIEF DESCRIPTION OF THE DRAWING FIGURES

FIG. 1 is a block diagram showing a wireless network architecture.
FIG. 2 is a flow diagram illustrating a method for operating a wireless data communications network according to a presently preferred embodiment of the present invention.

### DETAILED DESCRIPTION OF THE INVENTION

Those of ordinary skill in the art will realize that the following description of the present invention is illustrative only and not in any way limiting. Other embodiments of the invention will readily suggest themselves to such skilled persons.

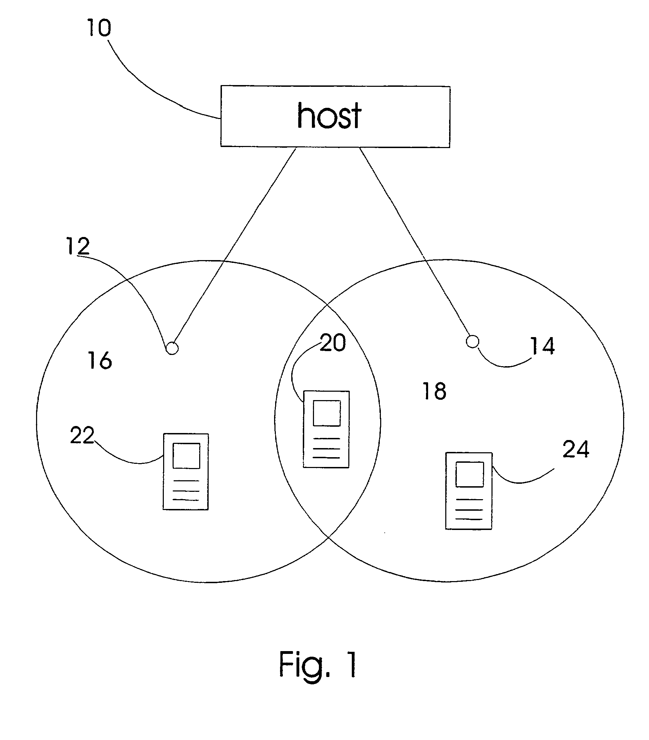

FIG. 1 is a block diagram showing a wireless network architecture. Host 10 is connected to Stationary Access Point 12 and Stationary Access Point 14. Stationary Access Point 12 handles wireless communications within area 16, and Stationary Access Point 14 handles communications within area 18. As shown in FIG. 1, therefore, Stationary Access Point 12 is in communication range of mobile unit 20 and mobile unit 22, and Stationary Access Point 14 is in communication range of mobile unit 20 and mobile unit 24. Mobile unit 20 is in communication range of either Stationary Access Point 12 or Stationary Access Point 14, although mobile unit 20 preferably only communicates with one of them at a time.

In one scenario, mobile unit 20 associates with an Stationary Access Point, for example Stationary Access Point 12, and thereafter communicates with Stationary Access Point 12 to transmit messages to the host or to other mobile units. If mobile unit 20 is associated with Stationary Access Point 12, mobile unit 20 could transmit a message to mobile unit 22 via Stationary Access Point 12, or to mobile unit 24 via Stationary Access Point 12, host 10, and Stationary Access Point 14.

In a preferred embodiment of the invention, a grouping of hosts and/or mobile units make up a wireless local area network (LAN).

Systems similar to the one depicted in FIG. 1 are found throughout the world. Each system, however, typically has different operating parameters in each country. According to a preferred embodiment of the present invention, a mobile unit is designed which may operate at a variety of different frequencies. The range of frequencies should be large enough to encompass some of the frequencies available for wireless communications in each country or geographic region in which the mobile unit may operate. Additionally, the mobile unit is designed to operate at a variety of different power settings, again with the range of power settings large enough to encompass at least some allowable power settings in each country in which the mobile unit may operate. These features allow the mobile unit to operate in a variety of different countries or geographic regions.

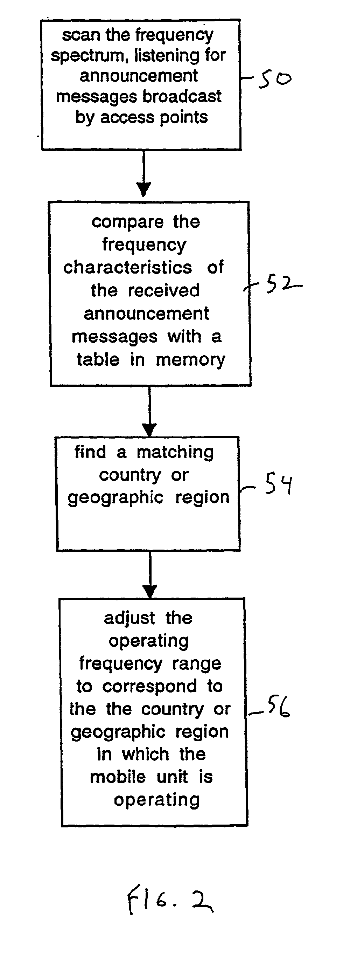

Furthermore, the mobile unit is designed to automatically configure itself for use in individual countries or geographic regions. This may be accomplished by running a program or method contained in either software or hardware within the mobile unit. FIG. 2 is a flow diagram illustrating the method according to a preferred embodiment of the present invention. At step 50, the mobile unit scans the frequency spectrum, listening for announcement messages broadcast by access points. This may encompass tuning to each available frequency an announcement message from a nearby access point is received. The announcement message will have a frequency characteristic that is unique to a particular geographic region or country.

At step 52, the frequency characteristics of the received announcement message are compared with a table or equivalent data structure contained in memory. The table may contain a listing of the breakdown of the frequency spectrum for all the different available countries or geographic regions. It also may list regulations on power output or other regulations important to the functioning of the mobile unit. At step 54, a matching country or geographic region is found. At this point, the mobile unit has determined what country or geographic region in which it is operating. At step 56, the mobile unit adjusts its operating frequency range to correspond to the country or geographic region in which it is operating. It may also alter other operating characteristics, such as power output and modulation type, in accordance with the regulations listed in the table or other data structure corresponding to the country in which the unit is located.

After the geographic region frequency and power settings (and any other operating characteristics) have been adapted for use in the country or geographic region in which the unit is located, the mobile unit operates similarly to a conventional mobile unit. '

Some regulations require that the regulations themselves be displayed to the user. Normally, these regulations would be placed on the outer surface of a unit capable of transmitting in the country. However, since the unit of the present invention may be capable of transmission in many different countries, this may not be feasible. Therefore, the unit may be configured such that, after the unit has determined the country in which it is located, the proper regulatory information is displayed to the user.

Referring back to FIG. 1, Stationary Access Point 12, Stationary Access Point 14, and host 10 may be implemented in hardware or software or a combination of hardware and software. Mobile unit 22, mobile unit 20 and mobile unit 24 may be implemented as programmable processor-based units executing software modules. An embodiment of the process performed by the software modules is described below. In one embodiment, mobile units 20, 22 and 24 are hand-held data-gathering units.

The contents of U.S. Patent No. 5,029,183 to Tymes, and U.S. Patent No. 5,668,803 to Tymes et al. show systems in which methods and apparatus consistent with the principles of the present invention may be practiced. Each patent describes a system in which hand-held data-gathering mobile units communicate via wireless link with Stationary Access Points, similar to the system shown in FIG. 1.

In another embodiment of the present invention, the mobile unit may be configured so that the user must verify the country in which they are located. For example, if the mobile unit determines through looking at the table that it is currently located in Switzerland, a message may appear on a display screen on the mobile unit saying "You are in Switzerland. Is this correct? (Y/N)". The user may then be required to confirm that they are indeed in Switzerland before the mobile unit reconfigures its settings to comply with Swiss standards. This reduces the chance of the unit mistakenly configuring itself to specific characteristics which may violate certain regulations.

In another embodiment of the present invention, a Global Positioning System (GPS) locator may be built into the mobile unit, allowing the unit to verify its location instead of or in addition to requiring confirmation from the user. This feature also reduces the chance of the unit mistakenly configuring itself to specific characteristics which may violate certain regulations.

In another embodiment of the present invention, the multiple geographic region feature (the feature embodied by the above methods) may be enabled or disabled by a user. When the feature is disabled, the mobile unit merely attempts to establish communication using a communication setting for a particular geographic region. This setting may be, for example, a default setting or the setting in use at the time the mobile unit was last turned off.

## Claims

1. A method for operating a wireless data communications network including a mobile unit (20, 22, 24) and one or more access points (12, 14), wherein the method includes the steps of:
receiving in the mobile unit (20, 22, 24) announcement messages broadcast by one or more of the access points (12, 14), each of said messages having a unique frequency characteristic associated with the geographic location of the access point (12, 14) from which it was sent; determining, in said mobile unit (20, 22, 24), an allowable frequency set in the geographic region associated with the access point (12, 14) from which each of said messages was sent; and adjusting the frequency set of the mobile unit (20, 22, 24) to send messages on said allowable frequency set,
wherein said determining step includes the steps of:
comparing said unique frequency characteristics of said messages to a table stored in memory of the mobile unit, said table containing a listing of various allowable frequency sets for corresponding to different geographic regions;
matching said unique frequency characteristics to a single geographic region in the table; and
referring to said allowable frequency set corresponding to said single geographic region,
**characterized in that**
said table further includes a listing of various allowable power output levels corresponding to different geographic regions, and
said determining step further includes the steps of:
referring to said allowable power output levels corresponding to said single geographic region; and
adjusting the power output level of the mobile unit (20, 22, 24) to operate within said allowable power output levels.

2. The method of claim 1, wherein said table further includes a listing of various regulations corresponding to different geographic regions.

3. The method of claim 2, further including the step of:
displaying said regulations corresponding to the geographic region in which the mobile unit (20, 22, 24) is located to a user.

4. The method of claim 3, further including the steps of:
referring to said regulations corresponding to said single geographic region; and
adjusting the operating characteristics of the mobile unit (20, 22, 24) to comply with said regulations.

5. The method of any of the preceding claims, further comprising the steps of:
scanning the frequency spectrum until an announcement message from an access point (12, 14) is detected;
examining the frequency characteristics of said announcement message; comparing said frequency characteristics with a table in a memory in the mobile unit (20, 22, 24);
determining the geographic region by matching said frequency characteristics with a geographic region listed in said table, said table also listing a frequency range for each geographic region; and
adjusting the operating frequency range of the mobile unit (20, 22, 24) to correspond with said frequency range corresponding to the geographic region.

6. The method of any of the preceding claims, further including the steps of:
sending a message to a user to verify that the geographic region determined by the mobile unit (20, 22, 24) is correct; and
transmitting only if said user verifies that the geographic region determined by the mobile unit (20, 22, 24) is correct.

7. The method of any of the preceding claims, further including the steps of:
utilizing a Global Positioning System locator to verify the geographic region in which the mobile unit (20, 22, 24) is located;
transmitting only if said Global Positioning Sensor locator verifies that the geographic region determined by the mobile unit (20, 22, 24) is equivalent to the geographic region in which the mobile unit (20, 22, 24) is located.

8. The method of any of the preceding claims, wherein a user may disable the feature which executes the method.

9. A mobile unit (20, 22, 24) for use in a wireless data communications network including one or more access points (12, 14), wherein the frequency set of the mobile unit (20, 22, 24) may be modified and the mobile unit (20, 22, 24) includes:
a receiver for receiving in the mobile unit (20, 22, 24) announcement messages broadcast by one or more of the access points (12, 14), each of said messages having a unique frequency characteristic associated with the geographic location of the access point (12, 14) from which it was sent;
a processing unit for determining, an allowable frequency set in the geographic region associated with the access point (12, 14) from which each of said messages was sent; and
a frequency set adjuster for adjusting, the frequency set to send messages on said allowable frequency set,
wherein said processing unit includes:
a comparator for comparing, said unique frequency characteristics of said messages to a table stored in a memory of the mobile unit (20, 22, 24), said table containing a listing of various allowable frequency sets for corresponding to different geographic regions;
a matcher for matching, said unique frequency characteristics to a single geographic region in the table; and
a first reader for referring, to said allowable frequency set corresponding to said single geographic region,
**characterized in**
said table further including a listing of various allowable power output levels corresponding to different geographic regions, and
the power output level of the mobile unit (20, 22, 24) being adjustable and the mobile unit (20, 22, 24) including
a second reader for referring to said allowable power output levels corresponding to said single geographic region; and
a power output level adjuster for adjusting the power output level of the mobile unit (20, 22, 24) to operate within said allowable power output levels.

10. The mobile unit (20, 22, 24) of claim 9, wherein said table further includes a listing of various regulations corresponding to different geographic regions.

11. The mobile unit (20, 22, 24) of claim 10, further including a display, which displays said regulations corresponding to the geographic region in which the mobile unit (20, 22, 24) is located to a user.

12. The mobile unit (20, 22, 24) of claim 11, wherein the operating characteristics of the mobile unit (20, 22, 24) may be adjusted and the mobile unit (20, 22, 24) includes:
a third reader, which refers to said regulations corresponding to said single geographic region; and
an operating characteristics adjuster, which adjusts the operating characteristics of the mobile unit (20, 22, 24) to comply with said regulations.

13. The mobile unit (20, 22, 24) of any of claims 9-12, further comprising:
a frequency scanner, which scans the frequency spectrum until an announcement message from an access point (12, 14) is detected;
a frequency characteristics detector, which examines the frequency characteristics of said announcement message;
a comparator, which compares said frequency characteristics with a table in a memory of said mobile unit (20, 22, 24);
a determiner, which determines the geographic region by matching said frequency characteristics with a geographic region listed in said table, said table also listing a frequency range for each geographic region; and
a frequency adjuster, which adjusts the operating frequency range of the mobile unit (20, 22, 24) to correspond with said frequency range corresponding to the geographic region.

14. The mobile unit (20, 22, 24) of any of claims 9-13 wherein the mobile unit (20, 22, 24) is a hand-held data gathering unit.

15. The mobile unit (20, 22, 24) of any of claims 9-14, further including:
a display;
a display transmitter, which sends a message to said display so that a user may verify that the geographic region determined by the mobile unit (20, 22, 24) is correct; and
a wireless transmitter, which transmits only if said user verifies that the geographic region determined by the mobile unit (20, 22, 24) is correct.

16. The mobile unit (20, 22, 24) of any of claims 9-15, further including:
a Global Positioning System locator, which verifies the geographic region in which the mobile unit (20, 22, 24) is located; and
a wireless transmitter, which transmits only if said Global Positioning Sensor locator verifies that the geographic region determined by the mobile unit (20, 22, 24) is equivalent to the geographic region in which the mobile unit (20, 22, 24) is located.

17. The mobile unit (20, 22, 24) of any of claims 9-16, further including means for disabling the multiple geographic region feature by a user.

## Patentansprüche

1. Verfahren zum Betreiben eines drahtlosen Daten Kommunikations-Netzwerks, das eine Mobileinheit (20, 22, 24) und einen oder mehrere Zugangspunkte (12, 14) aufweist, wobei das Verfahren die folgenden Schritte aufweist:
Empfangen von Benachrichtigungen in der Mobileinheit (20, 22, 24), die verbreitet werden durch einen oder mehrere der Zugangspunkte (12, 14), wobei jede dieser Nachrichten eine eindeutige Frequenzcharakteristik aufweist, die assoziiert ist mit der geographischen Position des Zugangspunktes (12, 14) von dem sie gesendet wurde;
Bestimmen eines erlaubten Frequenzsatzes in der Mobileinheit (20, 22, 24) innerhalb der geographischen Region, die assoziiert ist mit dem Zugangspunkt (12, 14) von dem jede der Nachrichten gesendet wurde; und
Abstimmen des Frequenzsatzes der Mobileinheit (20, 22, 24), um Nachrichten auf dem erlaubten Frequenzsatz zu senden, wobei der genannte Schritt des Bestimmens die folgenden Schritte aufweist:
Vergleichen der eindeutigen Frequenzcharakteristik der Nachrichten mit einer Tabelle, die gespeichert ist in einem Speicher der Mobileinheit (20, 22, 24), wobei die Tabelle eine Liste von verschiedenen Frequenzsätzen enthält entsprechend verschiedener geographischer Regionen;
Anpassen der eindeutigen Frequenzcharakteristik an eine einzige geographische Region in der Tabelle; und
Zugreifen auf den erlaubten Frequenzsatz, der der einzigen geographischen Region entspricht,
**dadurch gekennzeichnet, dass**
die Tabelle des weiteren eine Liste von verschiedenen erlaubten Ausgangsleistungspegeln aufweist, die verschiedenen geographischen Regionen entsprechen, und
der Schritt des Bestimmens ferner die folgenden Schritte aufweist:
Zugreifen auf die erlaubten Ausgangsleistungspegel, die der einzigen geographischen Region entsprechen, und
Abstimmen des Ausgangsleistungspegels der Mobileinheit (20, 22, 24) zum Betreiben dieser innerhalb der erlaubten Ausgangsleistungspegel.

2. Verfahren nach Anspruch 1, wobei die Tabelle ferner eine Liste von verschiedenen Regeln aufweist, die verschiedenen geographischen Regionen entsprechen.

3. Verfahren nach Anspruch 2, das ferner den folgenden Schritt aufweist:
Anzeigen der Regeln, und zwar einem Benutzer, die einer geographischen Region entsprechen in der sich die Mobileinheit (20, 22, 24) befindet.

4. Verfahren nach Anspruch 3, das ferner die folgenden Schritte aufweist:
Zugreifen auf die Regeln, die der einzigen geographischen Region entsprechen, und
Abstimmen der Betriebscharakteristik der Mobileinheit (20, 22, 24), um diesen Regeln zu genügen.

5. Verfahren nach einem der vorhergehenden Ansprüche, das ferner die folgenden Schritte aufweist:
Scannen des Frequenzspektrums bis eine Benachrichtigung eines Zugangspunktes (12, 14) detektiert wird;
Prüfen der Frequenzcharakteristik der Benachrichtigung;
Vergleichen der Frequenzcharakteristik mit einer Tabelle in einem Speicher in der Mobileinheit (20, 22, 24);
Bestimmen der geographischen Region durch Abgleichen der Frequenzcharakteristik mit einer geographischen Region, die in der Tabelle aufgelistet ist, wobei die Tabelle außerdem einen Frequenzbereich für jede geographische Region auflistet; und
Abstimmen des Betriebsfrequenzbereichs der Mobileinheit (20, 22, 24), um dem Frequenzbereich entsprechend der geographischen Region zu entsprechen.

6. Verfahren nach einem der vorhergehenden Ansprüche, das ferner die folgenden Schritte aufweist:
Senden einer Nachricht an einen Benutzer zum Verifizieren, dass die geographische Region, die von der Mobileinheit (20, 22, 24) bestimmt wurde, korrekt ist; und
Übertragen, nur dann, wenn der Benutzer bestätigt, dass die geographische Region, die von der Mobileinheit (20, 22, 24) bestimmt wurde, korrekt ist.

7. Verfahren nach einem der vorhergehenden Ansprüche, das ferner die folgenden Schritte aufweist:
Benutzen eines globalen Positionsbestimmungssystems zum Verifizieren der geographischen Region in der sich die Mobileinheit (20, 22, 24) befindet;
Übertragen, nur dann, wenn das globale Positionsbestimmungssystem bestätigt, dass die geographische Region, die von der Mobileinheit (20, 22, 24) bestimmt wurde äquivalent ist zu der geographischen Region in der sich die Mobileinheit (20, 22, 24) befindet.

8. Verfahren nach einem der vorhergehenden Ansprüche, wobei ein Benutzer die Funktion, welche das Verfahren ausführt abschalten kann.

9. Mobileinheit (20, 22, 24) zum Benutzen in einem drahtlosen Daten Kommunikations-Netzwerk, das einen oder mehrere Zugangspunkte (12, 14) aufweist, wobei der Frequenzsatz der Mobileinheit (20, 22, 24) abgeändert werden kann und die Mobileinheit (20, 22, 24) folgendes aufweist:
einen Empfänger zum Empfangen von Benachrichtigungen in der Mobileinheit (20, 22, 24), die verbreitet werden durch einen oder mehrere der Zugangspunkte (12, 14), wobei jede dieser Nachrichten eine eindeutige Frequenzcharakteristik aufweist, die assoziiert ist mit der geographischen Position des Zugangspunktes (12, 14) von dem sie gesendet wurde;
eine Verarbeitungseinheit zum Bestimmen eines erlaubten Frequenzsatzes innerhalb der geographischen Region, die assoziiert ist mit dem Zugangspunkt (12, 14) von dem jede der Nachrichten gesendet wurde; und
einen Frequenzsatzabstimmer zum Abstimmen des Frequenzsatzes, um Nachrichten auf dem erlaubten Frequenzsatz zu senden,
wobei die Verarbeitungseinheit folgendes aufweist:
einen Vergleicher zum Vergleichen der eindeutigen Frequenzcharakteristiken der Nachrichten mit einer Tabelle, die gespeichert ist in einem Speicher der Mobileinheit (20, 22, 24), wobei die Tabelle eine Liste von verschiedenen, erlaubten Frequenzsätzen enthält entsprechend verschiedener geographischer Regionen;
einen Anpasser zum Anpassen der eindeutigen Frequenzcharakteristik an eine einzige geographische Region in der Tabelle; und
einen ersten Leser zum Zugreifen auf den erlaubten Frequenzsatz, der der einzelnen geographischen Region entspricht, **dadurch gekennzeichnet, dass**
die Tabelle, ferner eine Liste verschiedener erlaubter Ausgangsleistungspegel aufweist, die verschiedenen geographischen Regionen entsprechen, und wobei der Ausgangsleistungspegel der Mobileinheit (20, 22, 24) abstimmbar ist und die Mobileinheit (20, 22, 24) ferner folgendes aufweist:
einen zweiten Leser zum Zugreifen auf die erlaubten Ausgangsleistungspegel, die der einzigen geographischen Region entsprechen; und
einen Ausgangsleistungspegel-Abstimmer, zum Abstimmen des Ausgangsleistungspegels der Mobileinheit (20, 22, 24) zum Betreiben dieser innerhalb der erlaubten Ausgangsleistungspegel.

10. Mobileinheit (20, 22, 24) nach Anspruch 9, wobei die Tabelle ferner eine Auflistung aufweist von verschiedenen Regeln, die verschiedenen geographischen Regionen entsprechen.

11. Mobileinheit (20, 22, 24) nach Anspruch 10, die ferner ein Display aufweist, das einem Benutzer die Regeln entsprechend der verschiedenen geographischen Regionen in denen sich die Mobileinheit (20, 22, 24) befindet, anzeigt.

12. Mobileinheit (20, 22, 24) nach Anspruch 11, wobei die Betriebscharakteristik der Mobileinheit (20, 22, 24) abgestimmt werden kann und die Mobileinheit (20, 22, 24) ferner folgendes aufweist:
einen dritten Leser, der auf die Regeln verweist, die der einzelnen geographischen Region entsprechen; und
einen Betriebscharakteristik-Abstimmer, der die Betriebscharakteristik der Mobileinheit (20, 22, 24) so abstimmt, dass sie den Regeln genügt.

13. Mobileinheit (20, 22, 24) nach einem der Ansprüche 9-12, die ferner folgendes aufweist:
einen Frequenzabtaster, der das Frequenzspektrum abtastet bis eine Benachrichtigung von einem Zugangspunkt (12, 14) detektiert wird; einen Frequenzcharakteristik-Detektor, der die Frequenzcharakteristik der Benachrichtigung prüft;
einen Vergleicher, der die Frequenzcharakteristik mit einer Tabelle in einem Speicher der Mobileinheit (20, 22, 24) vergleicht;
einen Bestimmer, der die geographische Region durch Anpassen der Frequenzcharakteristik mit der geographischen Region, die in der Tabelle aufgelistet ist bestimmt, wobei die Tabelle außerdem einen Frequenzbereich für jede geographische Region auflistet; und
einen Frequenzabstimmer, der den Betriebsfrequenzbereich der Mobileinheit (20, 22, 24) so abstimmt, damit diese dem Frequenzbereich entspricht, der der geographischen Region entspricht.

14. Mobileinheit (20, 22, 24) nach einem der Ansprüche 9-13, wobei die Mobileinheit (20, 22, 24) eine handgehaltene Datenerfassungseinheit ist.

15. Mobileinheit (20, 22, 24) nach einem der Ansprüche 9-14, die ferner folgendes aufweist:
ein Display;
einen Display-Sender, der eine Nachricht an das Display sendet, damit ein Benutzer verifizieren kann, dass die geographische Region, die von der Mobileinheit (20, 22, 24) bestimmt wurde, korrekt ist; und
einen drahtlosen Sender, der nur dann sendet, wenn der Benutzer bestätigt, dass die geographische Region, die von der Mobileinheit (20, 22, 24) bestimmt wurde, korrekt ist.

16. Mobileinheit (20, 22, 24) nach einem der Ansprüche 9-15, die ferner folgendes aufweist:
ein globales Positionsbestimmungssystem, das die geographische Region verifiziert, in der sich die Mobileinheit (20, 22, 24) befindet; und
einen drahtlosen Sender, der nur dann sendet, wenn das globale Positionsbestimmungssystem bestätigt, dass die geographische Region, die von der Mobileinheit (20, 22, 24) bestimmt wurde, äquivalent ist mit der geographischen Region, in der sich die Mobileinheit (20, 22, 24) befindet.

17. Mobileinheit (20, 22, 24) nach einem der Ansprüche 9-16, die ferner Mittel aufweist zum Abschalten der Funktion mehrfacher geographischer Regionen durch den Benutzer.

## Revendications

1. Procédé pour actionner un réseau de communication de données sans fil comprenant un poste mobile (20, 22, 24) et un ou plusieurs points d'accès (12, 14), le procédé comprenant les étapes suivantes :
recevoir dans le poste mobile (20, 22, 24) des messages d'annonce diffusés par un ou plusieurs des points d'accès (12, 14), chacun des messages ayant une caractéristique de fréquence spécifique associée à l'emplacement géographique du point d'accès (12, 14) à partir duquel il a été envoyé ;
déterminer, dans le poste mobile (20, 22, 24), un ensemble de fréquences autorisé dans la région géographique associée au point d'accès (12, 14) à partir duquel chacun des messages a été envoyé ; et régler l'ensemble de fréquences du poste mobile (20, 22, 24) pour envoyer des messages sur l'ensemble de fréquences autorisé,
dans lequel l'étape de détermination comprend les étapes suivantes :
comparer les caractéristiques de fréquence spécifiques des messages à une table mémorisée dans une mémoire du poste mobile, la table contenant une liste de divers ensembles de fréquences autorisés pour correspondre à différentes régions géographiques ;
faire concorder les caractéristiques de fréquence spécifiques avec une unique région géographique de la table ; et
faire référence à l'ensemble de fréquences autorisé correspondant à la région géographique unique,
**caractérisé en ce que**
la table comprend en outre une liste de divers niveaux de puissance de sortie autorisés correspondant aux différentes régions géographiques, et
l'étape de détermination comprend en outre les étapes suivantes :
faire référence aux niveaux de puissance de sortie autorisés correspondant à la région géographique unique ; et
régler le niveau de puissance de sortie du poste mobile (20, 22, 24) pour fonctionner dans les niveaux de puissance de sortie autorisés.

2. Procédé selon la revendication 1, dans lequel la table comprend en outre une liste de diverses réglementations correspondant aux différentes régions géographiques.

3. Procédé selon la revendication 2, comprenant en outre l'étape suivante :
afficher pour un utilisateur les réglementations correspondant à la région géographique dans laquelle le poste mobile (20, 22, 24) est situé.

4. Procédé selon la revendication 3, comprenant en outre les étapes suivantes :
faire référence aux réglementations correspondant à la région géographique unique ; et
régler les caractéristiques fonctionnelles du poste mobile (20, 22, 24) pour respecter lesdites réglementations.

5. Procédé selon l'une quelconque des revendications précédentes, comprenant en outre les étapes suivantes :
balayer le spectre de fréquences jusqu'à ce qu'un message d'annonce en provenance d'un point d'accès (12, 14) soit détecté ;
examiner les caractéristiques de fréquence du message d'annonce ;
comparer les caractéristiques de fréquence à une table en mémoire dans le poste mobile (20, 22, 24) ;
déterminer la région géographique en faisant concorder les caractéristiques de fréquence avec une région géographique listée dans la table, la table listant aussi une plage de fréquence pour chaque région géographique ; et
régler la plage de fréquence de fonctionnement du poste mobile (20, 22, 24) pour correspondre à la plage de fréquence correspondant à la région géographique.

6. Procédé selon l'une quelconque des revendications précédentes, comprenant en outre les étapes suivantes :
envoyer un message à un utilisateur pour vérifier que la région géographique déterminée par le poste mobile (20, 22, 24) est correcte ; et
émettre seulement si l'utilisateur vérifie que la région géographique déterminée par le poste mobile (20, 22, 24) est correcte.

7. Procédé selon l'une quelconque des revendications précédentes, comprenant en outre les étapes suivantes :
utiliser un dispositif de localisation du Système de Positionnement Global pour vérifier dans quelle région géographique est situé le poste mobile (20, 22, 24) ;
émettre seulement si le dispositif de localisation du Système de Positionnement Global vérifie que la région géographique déterminée par le poste mobile (20, 22, 24) est équivalente à la région géographique dans laquelle le poste mobile (20, 22, 24) est situé.

8. Procédé selon l'une quelconque des revendications précédentes, dans lequel un utilisateur peut désactiver la fonctionnalité qui exécute le procédé.

9. Poste mobile (20, 22, 24) pour utilisation dans un réseau de communications de données sans fil comprenant un ou plusieurs points d'accès (12, 14), dans lequel l'ensemble de fréquences du poste mobile (20, 22, 24) peut être modifié et dans lequel le poste mobile (20, 22, 24) comprend :
un récepteur pour recevoir dans le poste mobile (20, 22, 24) des messages d'annonce diffusés par un ou plusieurs des points d'accès (12, 14), chacun des messages ayant une caractéristique de fréquence spécifique associée à la position géographique du point d'accès (12, 14) à partir duquel il a été envoyé ;
un module de traitement pour déterminer un ensemble de fréquences autorisé dans la région géographique associée au point d'accès (12, 14) à partir duquel chacun des messages a été envoyé ; et
un dispositif de réglage d'ensemble de fréquences pour régler l'ensemble de fréquences pour envoyer des messages sur l'ensemble de fréquences autorisé,
dans lequel le module de traitement comprend :
un comparateur pour comparer les caractéristiques de fréquence spécifiques des messages à une table mémorisée dans une mémoire du poste mobile (20, 22, 24), la table contenant une liste de divers ensembles de fréquences autorisés pour correspondre à différentes régions géographiques ;
un dispositif de recherche de concordance pour rechercher une concordance entre les caractéristiques de fréquence spécifiques et une seule région géographique de la table ; et
un premier lecteur pour faire référence à l'ensemble de fréquences autorisé correspondant à ladite région géographique spécifique,
**caractérisé en ce que** la table comprend en outre une liste de divers niveaux de puissance de sortie autorisés correspondant à différentes régions géographiques, et
le niveau de puissance de sortie du poste mobile (20, 22, 24) étant réglable et le poste mobile (20, 22, 24) comprenant :
un deuxième lecteur pour faire référence aux niveaux de puissance de sortie autorisés correspondant à la région géographique unique ; et
un dispositif de réglage de niveau de puissance de sortie pour régler le niveau de puissance de sortie du poste mobile (20, 22, 24) pour fonctionner dans les niveaux de puissance de sortie autorisés.

10. Poste mobile (20, 22, 24) selon la revendication 9, dans lequel la table comprend en outre une liste de diverses réglementations correspondant à différentes régions géographiques.

11. Poste mobile (20, 22, 24) selon la revendication 10, comprenant en outre un afficheur, qui affiche pour un utilisateur les réglementations correspondant à la région géographique dans laquelle le poste mobile (20, 22, 24) est situé.

12. Poste mobile (20, 22, 24) selon la revendication 11, dans lequel les caractéristiques de fonctionnement du poste mobile (20, 22, 24) peuvent être réglées et le poste mobile (20, 22, 24) comprend :
un troisième lecteur, qui fait référence aux réglementations correspondant à la région géographique unique ; et
un dispositif de réglage de caractéristiques de fonctionnement, qui règle les caractéristiques de fonctionnement du poste mobile (20, 22, 24) pour respecter les réglementations.

13. Poste mobile (20, 22, 24) selon l'une quelconque des revendications 9 à 12, comprenant en outre :
un analyseur de fréquences, qui balaye le spectre de fréquences jusqu'à ce qu'un message d'annonce provenant d'un point d'accès (12, 14) soit détecté ;
un détecteur de caractéristiques de fréquence, qui examine les caractéristiques de fréquence du message d'annonce ;
un comparateur, qui compare les caractéristiques de fréquence à une table dans une mémoire du poste mobile (20, 22, 24) ;
un dispositif de détermination, qui détermine la région géographique en faisant concorder les caractéristiques de fréquence avec une région géographique listée dans la table, la table listant aussi une plage de fréquences pour chaque région géographique ; et
un dispositif de réglage de fréquence, qui règle la plage de fréquences de fonctionnement du poste mobile (20, 22, 24) pour correspondre à la plage de fréquences correspondant à la région géographique.

14. Poste mobile (20, 22, 24) selon l'une quelconque des revendications 9 à 13, dans lequel le poste mobile (20, 22, 24) est un poste de collecte de données tenu à la main.

15. Poste mobile (20, 22, 24) selon l'une quelconque des revendications 9 à 14, comprenant en outre :
un afficheur ;
un transmetteur d'affichage, qui envoie un message vers l'afficheur afin qu'un utilisateur puisse vérifier que la région géographique déterminée par le poste mobile (20, 22, 24) est correcte ; et
un émetteur sans fil, qui émet uniquement si l'utilisateur vérifie que la région géographique déterminée par le poste mobile (20, 22, 24) est correcte.

16. Poste mobile (20, 22, 24) selon l'une quelconque des revendications 9 à 15, comprenant en outre :
un dispositif de localisation du Système de Positionnement Global, qui vérifie la région géographique dans laquelle le poste mobile (20, 22, 24) est situé ; et
un émetteur sans fil, qui émet uniquement si le dispositif de localisation du Système de Positionnement Global vérifie que la région géographique déterminée par le poste mobile (20, 22, 24) est équivalente à la région géographique dans laquelle le poste mobile (20, 22, 24) est situé.

17. Poste mobile (20, 22, 24) selon l'une quelconque des revendications 9 à 16, comprenant en outre des moyens de désactivation par un utilisateur de la fonctionnalité de région géographique multiple.
